Europäisches Patentamt

**European Patent Office**

Office européen des brevets

(11) Numéro de publication: **0 038 895**
**A1**

# DEMANDE DE BREVET EUROPEEN

(21) Numéro de dépôt: **80400600.5**

(22) Date de dépôt: **30.04.80**

(51) Int. Cl.³: **B 63 B 1/06**
**B 63 B 1/32**

(30) Priorité: **17.04.80 FR 8008603**

(43) Date de publication de la demande:
**04.11.81 Bulletin 81/44**

(84) Etats contractants désignés:
**AT BE CH DE IT LI LU NL SE**

(71) Demandeur: **Delpech de Frayssinet, Jehan**
**7, rue de Mont Thabor**
**F-75001 Paris(FR)**

(72) Inventeur: **Delpech de Frayssinet, Jehan**
**7, rue de Mont Thabor**
**F-75001 Paris(FR)**

(74) Mandataire: **Loyer, Bertrand et al,**
**Cabinet Pierre Loyer 18, rue de Mogador**
**F-75009 Paris(FR)**

(54) **Procédé permettant de diminuer la résistance à l'avancement des carènes de bateaux.**

(57) Carène incorporant deux conduits (2,3) symétriques en forme de gouttière, ouverts vers l'extérieur, destinés à permettre l'évacuation de l'eau déplacée, ces deux conduits (2,3) en forme de gouttière prenant naissance au point le plus bas (4) de l'étrave et divergeant vers l'arrière l'un de l'autre en s'écartant progressivement du plan médian longitudinal de la coque, en s'élevant le long des bordés vers le haut, jusqu'audessus de la ligne de flottaison (0) et en ayant une section qui augmente de façon constante.

Fig. 4

- 1 -

## Procédé permettant de diminuer la résistance à l'avancement des carènes de bateaux.

La présente invention concerne un procédé permettant de diminuer la résistance à l'avancement de carène de bateaux en faisant diminuer la pression qui est provoquée par l'avancement d'une carène dans l'eau.

Il est bien connu que lorsqu'un corps partiellement immergé dans l'eau est animé d'un mouvement dans ce fluide, cet avancement provoque un déplacement du fluide qui engendre une résistance due aux pressions de pénétration, pressions qui sont fonction de la surface de la section immergée et de la vitesse d'avancement. Cette résistance est indépendante des résistances aux glissements dues à des phénomènes de frottement contre la surface de la carène.

Le procédé selon la présente invention a pour objet d'éliminer ou au moins de diminuer de façon importante la résistance due à l'avancement par l'intermédiaire d'un dispositif appelé "dépresseur d'étrave".

Le dispositif objet de l'invention peut être utilisé dans le domaine de l'architecture navale pour ce qui concerne la conception des volumes de pénétration à partir de l'étrave des carènes de bateaux.

L'invention peut être utilisée dans tous les domaines où il est nécessaire, soit de faciliter le glissement d'un solide dans un fluide, soit de faciliter l'écoulement d'un fluide sur un solide, par exemple pied de digue.

Selon ce procédé, on incorpore au dessin d'une carène de bateau, au moins deux conduits symétriques en forme de gouttière, ouverts vers l'extérieur, qui prennent naissance au point le plus bas de l'étrave, puis se dirigent vers l'arrière en s'écartant progressivement du plan médian de ladite carène en remontant vers le haut, de façon à déboucher au-dessus de la ligne de flottaison. Ces deux gouttières vont conduire à la surface, en les faisant échapper latéralement, les masses d'eau mises en pression par les forces de propulsion.

A titre d'exemples, non limitatifs, et afin de faciliter la compréhension de l'invention, on a représenté aux dessins annexés :

Figure 1, une vue schématique latérale d'un conduit en forme de gouttière selon l'invention;

Figure 2, une vue schématique en plan, par-dessous, des deux conduits symétriques;

Figure 3, une famille d'épures de carène avec illustration d'un conduit à fond incurvé à chaque coupe.

Figure 4, une vue en perspective d'une carène retournée ayant deux conduits en forme de gouttière dont les sections ont une forme différente de celle de la figure 3;

Figure 5, une vue partielle à grande échelle en coupe selon AA de la figure 4.

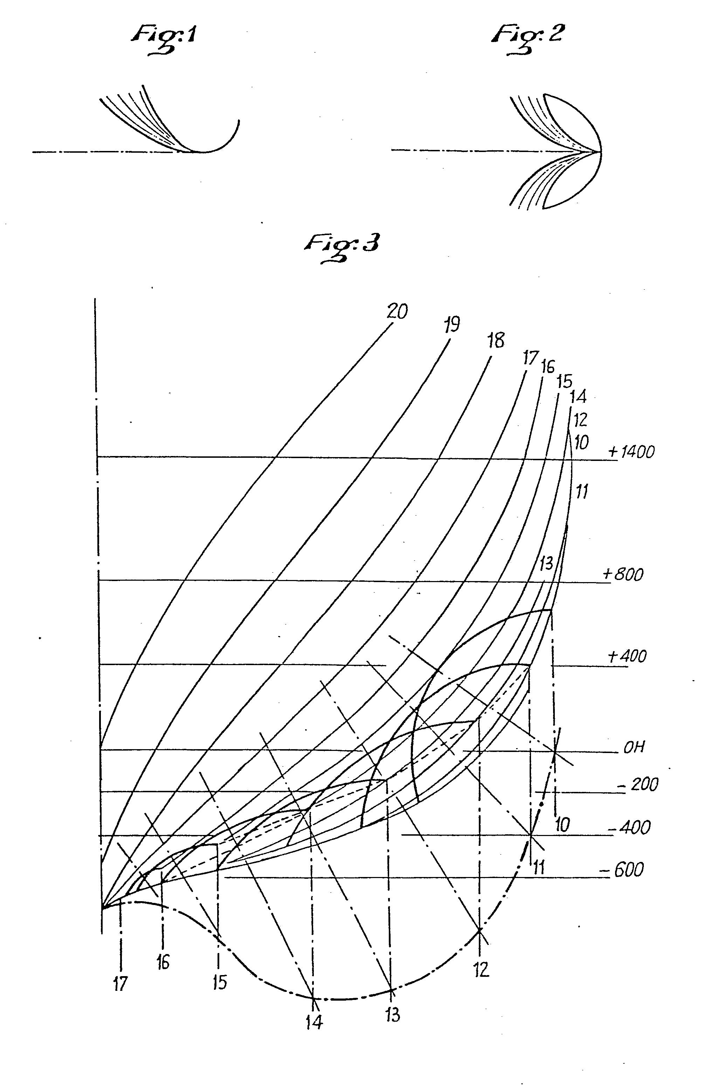

Aux figures 1 et 2 on a représenté d'une façon schématique deux vues : l'une latérale, l'autre en plan des conduits qui ont pour objet de provoquer une diminution de la pression créée par

- 3 -                    0038895

l'étrave.

Comme cela a été expliqué, la présente invention a pour objet
d'éliminer, sinon totalement, au moins en grande partie, les
forces de pression qui sont provoquées par une coque de bateau,
ou carène, se déplaçant dans l'eau. Ces pressions sont fonction
de la surface de la plus grande section immergée de la coque
et de la vitesse d'avancement : les conduits en forme de gouttière divergents prenant naissance au creux de l'étrave (au
point le plus bas de l'étrave) et se terminant au-dessus de
la ligne de flottaison et dans le plan de la plus grande section de la coque ont pour effet de permettre à l'eau mise en
pression par l'avancement de la coque de s'échapper vers l'arrière et au-dessus du niveau de l'eau, ce qui supprime pratiquement les systèmes de vagues dont la relation vitesse:longueur de carène a été établie par W. FROUDE.

Le résultat en est une diminution considérable de la résistance
à l'avancement de la coque dans l'eau et donc une remarquable
amélioration des performances.

La figure 3 est un diagramme de carène illustrant un certain
nombre de sections numérotées de 20 à 10, depuis l'étrave jusqu'à la largeur maximum de la coque. A chaque section illustrant le dessin extérieur de la coque, figure le dessin de la
section du conduit en forme de gouttière à cette section.

Dans cet exemple (conduit babord), on voit que le conduit en
forme de gouttière a un profil qui est presque une portion de
cylindre et que ses dimensions augmentent de façon progressive
vers l'arrière et vers le haut. On voit, en particulier, qu'en
10, qui correspond à la plus large section de la coupe, le conduit en forme de gouttière est aux trois-quarts au-dessus de
la ligne de flottaison indiquée par la référence OH.

De préférence, la surface de la section du conduit en forme de
gouttière, à cette extrémité, est de l'ordre du quart de la section du maître couple mouillé, mais plus ou moins selon l'écoulement et les performances que l'on désire obtenir.

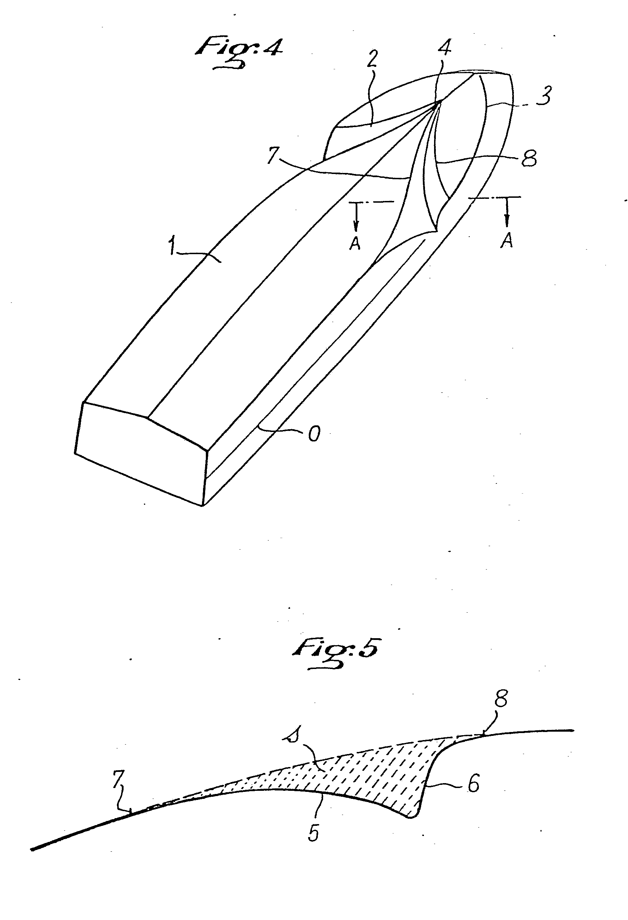

En se reportant aux figures 4 et 5, on voit que la coque 1 comporte deux conduits en forme de gouttière 2 et 3 symétriques, divergents, qui ont leur origine au point 4, qui est le point le plus bas de l'étrave. Ces conduits en forme de gouttière 2 et 3 s'étendent vers l'arrière, tout en s'écartant progressivement du plan médian longitudinal de la coque, tout en s'élevant de façon telle qu'à leur extrémité, la plus grande partie de leur section soit située au-dessus de la ligne de flottaison O.

En se reportant à la figure 5, on voit que les deux parois latérales 5 (arrière) et 6 (avant) du conduit en forme de gouttière, sont convexes, mais non symétriques, la paroi 5 étant très arrondie, alors que la paroi 6 est très abrupte. Sur cette figure, la ligne en pointillé figure le tracé normal de la coque, sans la présence du conduit en forme de gouttière, dont la section s est représentée hachurée. Cette section s augmente de façon constante depuis l'origine 4, jusqu'à l'extrémité. La ligne 7 de jonction entre la paroi 5 du conduit en forme de gouttière et la paroi de la coque présente, de préférence, un point d'inflexion, alors que la ligne 8 de jonction entre la paroi 6 et la coque est un arrondi.

Comme dans le cas de la figure 1, la surface s de chaque conduit en forme de gouttière à son extrémité, est environ égale à environ le quart de la surface de la plus grande section mouillée de la coque et l'extrémité de chaque conduit en forme de gouttière est sensiblement au niveau de cette plus grande section de la coque.

Selon une variante de réalisation, non représentée, chaque conduit en forme de gouttière, tel que 2 ou 3, peut être remplacé par une pluralité de conduits en forme de gouttière, la surface de la section de chaque conduit en forme de gouttière étant telle que la somme de ses surfaces à leur extrémité soit sensiblement égale à environ le quart de la surface de la plus grande section mouillée plus ou moins selon l'écoulement et les performances que l'on désire obtenir; ces conduits ont soit le même point d'origine, soit des points d'origine voisins lorsque la carène a un enfoncement variable ou a une forme d'avant particulière.

Selon une variante de réalisation, également non représentée, on peut modifier une carène existante en rajoutant, à l'avant de la coque, un volume supplémentaire permettant de ménager deux conduits en forme de gouttière selon l'invention entre le volume additionnel et la coque proprement dite.

- 1 -

0038895

Revendications du brevet.

1.  Procédé permettant de diminuer la résistance à l'avancement des carènes de bateaux consistant à incorporer au dessin d'une carène deux conduits symétriques en forme de gouttière, ouverts vers l'extérieur, destinés à permettre l'évacuation de l'eau déplacée, ces deux conduits en forme de gouttière prenant naissance au point le plus bas (4) de l'étrave et divergeant vers l'arrière l'un de l'autre en s'écartant progressivement du plan médian longitudinal de la coque, en s'élevant le long des bordés vers le haut, jusqu'au-dessus de la ligne de flottaison (0) et en ayant une section qui augmente de façon constante.

2.  Procédé selon la revendication 1, caractérisé par le fait que les extrémités des deux conduits en forme de gouttière sont situées pratiquement à hauteur de la plus grande largeur de la coque.

3.  Procédé selon la revendication 1 ou 2, caractérisé par le fait que la section de chaque conduit en forme de gouttière est, à son extrémité, sensiblement égale à environ un quart de la surface de la plus grande section mouillée de la coque plus ou moins selon l'écoulement et les performances désirés.

4.  Procédé selon l'une quelconque des revendications 1 à 3, caractérisé par le fait que le fond du conduit en forme de gouttière a une forme constituant une portion de cylindre.

5.  Procédé selon l'une quelconque des revendications 1 à 3, caractérisé par le fait que les deux parois (5 et 6) du conduit en forme de gouttière sont convexes, la paroi arrière (5) étant aplatie et la paroi avant (6) abrupte.

6.  Procédé selon la revendication 5, caractérisé par le fait que la ligne de jonction (8) entre la paroi avant (6) du conduit en forme de gouttière et la coque est arrondie.

7.  Procédé selon la revendication 6, caractérisé par le fait que la ligne de jonction (7), entre la paroi arrière (5) du conduit en forme de gouttière et la coque, comporte un point d'inflexion.

8.  Procédé selon l'une quelconque des revendications 1 à 7, caractérisé par le fait que chaque conduit en forme de gouttière peut être remplacé par une pluralité de conduits ayant des points d'origine voisins, selon que la carène est un enfoncement variable ou ayant une forme d'avant particulière, la surface totale des conduits étant égale à celle d'un conduit en forme de gouttière unique calculé selon l'écoulement et les performances désirés.

Fig:1

Fig:2

Fig:3

*Fig:4*

*Fig:5*

**Office européen des brevets**

**RAPPORT DE RECHERCHE EUROPEENNE**

**0038895**
Numéro de la demande

EP 80 40 0600

| Catégorie | Citation du document avec indication, en cas de besoin, des parties pertinentes | Revendication concernée |
|---|---|---|
| | DE - C - 729 590 (E. GRUNDT)  \* Page 2, lignes 64-122; page 3, lignes 1-98; figures 1-13 \* | 1 |
| | -- | |
| | US - A - 4 003 325 (R.A. ALLEN)  \* Abrégé; figure 3 \* | 1 |
| | -- | |
| | FR - A - 956 241 (E. GRUNDT)  \* Page 10, lignes 18-38; figures 10-14 \* | 1 |
| | -- | |
| | US - A - 1 859 139 (M.J. HANLON)  \* Page 2, page 3, lignes 1-31; figures 1-8 \* | 1 |
| | ---- | |

**DOCUMENTS CONSIDERES COMME PERTINENTS**

**CLASSEMENT DE LA DEMANDE (Int. Cl.³)**

B 63 B 1/06
1/32

**DOMAINES TECHNIQUES RECHERCHES (Int. Cl.³)**

B 63 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-07-1981 | PRUSSEN |

OEB Form 1503.1   06.78